# EUROPEAN PATENT APPLICATION

(11) **EP 1 014 115 A1**
(43) Date of publication of application: **28.06.2000**
(21) Application number: 99309874.8
(22) Date of filing: 08.12.1999
(51) Int. Cl.: G02B 5/09, G02B 26/12

(54) **Circular polygon mirror**

(30) Priority: 18.12.1998 US 216586
(71) Applicant: Xerox Corporation, Rochester, New York 14644 (US)
(72) Inventor: Pecoraro, Charles C., Farmington Hills, Michigan 48334 (US); Ossman, Kenneth R., Macedon, New York 14502 (US); Hinton, John H., Plano, Texas 75025 (US)
(74) Representative: Rackham, Stephen Neil

(57) **Abstract**

A generally circular shaped polygon mirror (38) has internal facets (40). The polygon mirror has a body (146) made from an optically clear material. Light passes through the body (146) and reflects from the facets (40). The polygon mirror (38) also includes a central axial aperture (148). The polygon mirror is suitable for use in a polygon mirror assembly wherein it is mounted on a motor shaft. The polygon assembly is suitable for use as an exposure station in a raster output scanner.

## Description

Electrophotographic marking is a well-known method of copying or printing on a substrate. Electrophotographic marking is performed by exposing a substantially uniformly charged photoreceptor with a light image of an original document. That light image discharges the photoreceptor, creating an electrostatic latent image of the desired document on the photoreceptor's surface. A toner image is formed by depositing toner particles onto that latent image. The toner image is then transferred from the photoreceptor, either directly or after an intermediate transfer step, onto a marking substrate such as a sheet of paper. The transferred toner image is then fused to the marking substrate using heat and/or pressure. The surface of the photoreceptor is then cleaned of residual developing material and recharged in preparation for the creation of another image.

While many different types of exposure systems have been developed, one common system uses a raster output scanner that sweeps a modulated laser beam across the photoreceptor. A raster output scanner includes a laser, a modulator for modulating the laser with a representation of a desired image, a rotating polygon having reflective facets, input optics, output optics, and, usually, one or more folding mirrors. The laser, modulator, and input optics produce a modulated and collimated laser beam that is directed toward the polygon. As the polygon rotates the facets reflect the laser beam as a sweeping beam. The swept beam passes through the output optics, which focuses the laser beam onto the photoreceptor and which corrects for various problems such as wobble. The result is a modulated, sweeping spot that traces scan lines across the charged photoreceptor. As the charged photoreceptor moves in a direction that is substantially perpendicular to the scan line, the sweeping spot raster scans the photoreceptor. By suitably modulating the laser beam as the spot raster scans the photoreceptor a desired latent image is produced on the photoreceptor.

While raster output scanners have been successful, they are subject to various problems. One serious problem is noise. Since printers and copiers are used in and around humans, excessive machine noise is highly objectionable. Unfortunately, prior art rotating polygons tend to emit significant noise. As process speeds increase, polygon rotations, and thus noise, tends to increase as well. To make matter even worse, color marking machines often use four ROS systems. Other problems with prior art raster output scanners include excessive heat generation and excessive facet contamination. Heat generation and facet contamination can be traced to the sharp corners that exist in most prior art polygons. The sharp corners generate heat by displacing air molecules. This also results in pressure differentials around the polygon that cause the trailing edges of the polygon to attract contaminants.

In view of the problem of polygon noise, a lower noise raster output scanner having reduced heat generation and/or contamination would be useful.

The principles of the present invention enable polygons, and polygon assemblies to have improved characteristics of lower noise, less heat generation, and less contamination than most prior art polygons and polygon assemblies.

The improved characteristics of polygons according to the principles of the present invention are achieved using a circular external shape and internal facets. Since polygons according to the principles of the present invention have no sharp external edges to move significant amounts of air, they do not generate turbulance, heat, or noise.

A particular embodiment of the present invention will now be described and contrasted with the prior art with reference to the accompanying drawings; in which:-
Figure 1 schematically illustrates an electrophotographic printing machine that incorporates the principles of the present invention;
Figure 2 schematically illustrates a side view of a prior art polygon;
Figure 3 illustrates a cut-away view of another prior art polygon;
Figure 4 schematically illustrates a side view of a polygon according to the principles of the present invention; and
Figure 5 illustrates the polygon of Figure 4 mounted on a motor shaft.

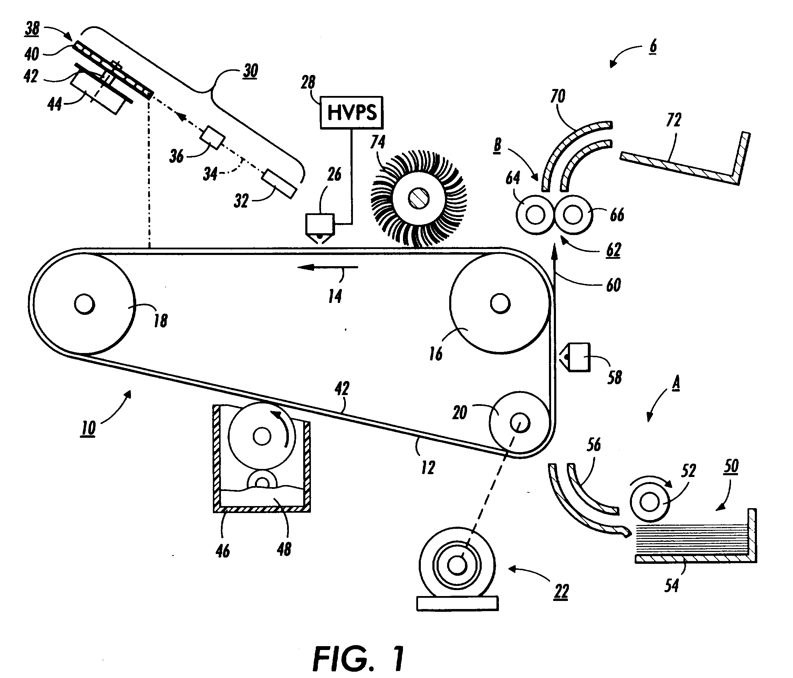

While the principles of the present invention will be described in connection with a preferred embodiment printing machine, it should be understood that the present invention is not limited to that embodiment. Furthermore, since the art of electrophotographic printing is well known, the various processing stations employed in the illustrated printing machine 6 (illustrated in Figure 1) are shown only schematically and their operation described only briefly.

Figure 1 shows an illustrative electrophotographic printing machine 6 that includes a raster output scanner that is in accord with the principles of the present invention. That printing machine employs a belt photoreceptor 10 having a photoconductive surface 12. The belt 10 rotates in the direction 14. The belt photoreceptor 10 is entrained about a stripping roller 16, a tensioning roller 18 and a driven roller 20. A motor 22 rotates the driven roller so as to advance the belt photoreceptor in the direction 14.

As the belt photoreceptor travels each part of it passes through each of the subsequently described process stations. For convenience, a single section of the belt, referred to as the image area, is identified. The image area is that part of the belt which is to receive the a final image. While the belt may have numerous image areas, since each image area is processed in the same way a description of the processing of one image area suffices to explain the operation of the printing machine 6.

Imaging process begins with the image area passing a corona generating device 26. That device charges the image area to a relatively high, substantially uniform potential. Charging current is supplied by a high voltage power supply (HVPS) 28 that is coupled to the corona generating device 26.

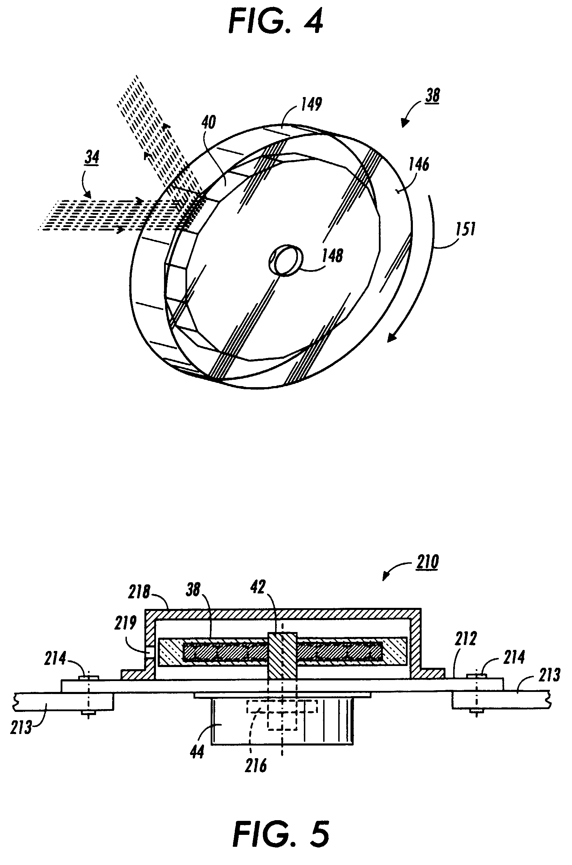

After charging, the image area advances to an exposure station 30. At the exposure station a laser diode 32 emits a modulated laser beam 34. That beam passes through an input optical system 36 that directs a collimated and focused beam onto a rotating polygon 38. That polygon includes a plurality of mirrored facets 40 that reflect the beam 34 onto the belt photoreceptor 10. By properly modulating the laser beam 34 (via an electronic subsystem and laser diode driver that are not shown) as the image area advances in the direction 14 the sweeping laser beam raster scans the image area to produce an electrostatic latent image on the surface 12. As shown in both Figures 1 and 5, the polygon 38 is mounted on a shaft 42 of a motor 44. The present invention is most directly related to the polygon 38 and to its facets 40. Therefore, the polygon and its facets are described in more detail subsequently.

Referring now to Figure 1, after the electrostatic latent image has been produced the image area advances to a developer 46 that deposits charged toner 48 on the latent image. After the image area is developed it advances to a transfer station A. There, a substrate 50 is placed over the developed image area by a sheet feeding apparatus. That sheet feeding apparatus includes a feed roll 52 that contacts the substrate 50 in a stack 54 of substrates. The substrate 50 passes into a chute 56 that directs the advancing substrate into contact with the belt photoreceptor 10 in a timed sequence such that the substrate overlays the developed image area. The transfer station A further includes a corona generating device 58 that sprays ions onto the backside of the substrate 50. This transfers the toner from the image area onto the substrate.

After transfer, the substrate advances in the direction 60 into a fusing station B. There, a fuser assembly 62 permanently affixes the transferred toner image to the substrate 50. The fuser assembly 62 includes a heated fuser roller 64 and a back-up roller 66. The substrate 50 passes between fuser roller 64 and back-up roller 66 with the toner side of the substrate contacting the fuser roller 64. In this manner, the toner powder image is permanently affixed to the substrate. After fusing the substrate advances through a chute 70 into a catch tray 72 for subsequent removal from the printing machine by an operator.

After the copy sheet has separated from the belt photoreceptor 10 any residual toner particles adhering to the photoconductive surface 12 are removed by a rotatably mounted fibrous brush 74. A discharge lamp (which is not shown for clarity) then exposes the photoreceptive surface 12 to dissipate any residual electrostatic charge.

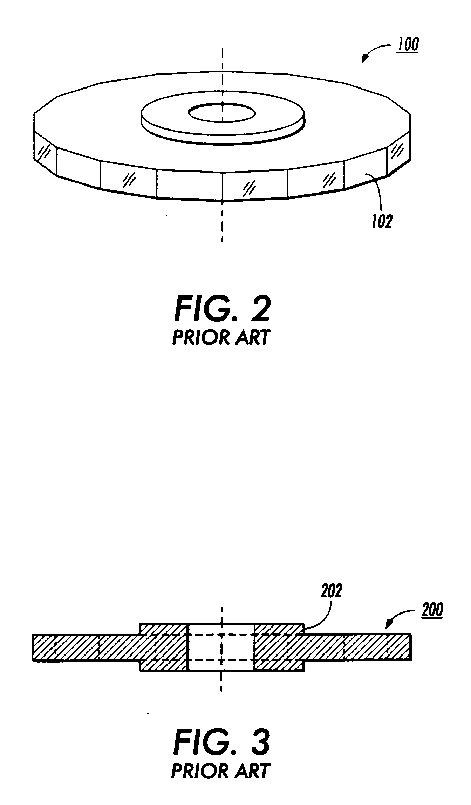

The foregoing description is sufficient for purposes of the present application to illustrate the general operation of an electrophotographic printing machine that incorporates the principles of the present invention. As previously stated the present invention is most closely related to the polygon 38 and to its facets 40. To better understand the principles of the present invention it is helpful to consider prior art polygons. Prior art polygons usually have one of two shapes. One shape is a thin flat disk 100 having facets 102 across the disk's outer edges as shown in Figure 2. Alternatively, prior art polygons have taken the shape of a disk 200 having a central hub 202 with external facets as shown in Figure 3. With regards to the disk 200, the hub 202 acts as a stiffener.

With either type of prior art polygon the facet corners may be pointed or rounded. As the rotating speed increases beyond about 24,000 rpm, the size of polygons generally stay at about 4 cm in diameter. This keeps the facet speed to about 50 m/s. For speeds beyond 50 m/s, the thickness of the polygons increases.

Figure 4 shows a preferred embodiment polygon 38 in more detail. That polygon has a relatively thin, generally circular shaped body 146. That body is comprised of an optically clear material such as glass or plastic. Inside the body are the reflective facets 40. At the center of the polygon is an axial opening 148 for mounting to the drive shaft 42 of the motor 44. The body 146 rotates in the direction 151. Therefore, the body has few, preferably no, edges or surface protrusions that are normal to the direction 151. The laser beam 34 passes through the body 146 and reflects from the facets 40.

Figure 5 shows a portion of a raster output scanner assembly 210 in which the polygon 38 is mounted to the drive shaft 42 of a motor 44. In turn, that motor is secured to a frame 212 that attaches a machine support 213 by means of standard mounting hardware 214. The drive shaft 42 is supported by at least one bearing 216 that is mounted into the drive motor 44. An optional cover 218 having an opening 219 is shown.

## Claims

1. A polygon mirror (38) having of a generally circularly shaped body (146) that is comprised of an optically clear material, said polygon mirror (38) further including a plurality of reflecting facets (40) within said body and a central axial (148) aperture.

2. A polygon mirror according to claim 1, wherein said body (146) is comprised of a glass.

3. A polygon mirror according to claim 1, wherein said body (146) is comprised of a plastics material.

4. A marking machine comprising:
a photoreceptor (12) having a photoconductive surface which moves in a process direction (14);
a charging station (26) for charging said photoconductive surface (12) to a predetermined potential;
a raster scanner assembly (30) for exposing said photoconductive surface to produce an electrostatic latent images on said photoconductive surface by sweeping a modulated laser beam (34) across said photoreceptor (12) in a fast scan direction which is substantially perpendicular to said process direction (14), said raster scanner assembly including:
a laser source (32);
a polygon mirror (38) according to any one of the preceding claims, and
a motor (44) having shaft that passes through said central axial aperture (148); whereby said polygon mirror (38) is attached to said motor;
a developing station (46) for depositing developing material on said electrostatic latent image so as to produce a first toner image on said photoconductive surface (12); and,
a transfer station (58) for receiving said first toner image from said photoconductive surface and for transferring said first toner image onto a substrate (60).
